# FASCICULE DE BREVET EUROPEEN

(11) **EP 3 422 858 B1**
(45) Date de publication et mention de la délivrance du brevet: **26.02.2020**
(21) Numéro de dépôt: 17832311.9
(22) Date de dépôt: 29.12.2017
(51) Int. Cl.: A01N 63/02, A01P 21/00

(54) **COMPOSITION BIOSTIMULANTE DE LA CROISSANCE DES PLANTES CONTENANT DES LIPOPEPTIDES**
PFLANZENWACHSTUM BIOSTIMULIERENDE ZUSAMMENSETZUNG ENTHALTEND LIPOPETPIDE
PLANT GROWTH BIOSTIMULATING COMPOSITION CONTAINING LIPOPEPTIDES

(30) Priorité: 30.12.2016 FR 1663540
(43) Date de publication de la demande: 09.01.2019
(73) Titulaire: Lipofabrik, 59655 Villeneuve D'Ascq (FR)
(72) Inventeur: COUTTE, François, 59310 Aix (FR); DELECROIX, Arnaud, 62840 Fleurbaix (FR); EL GHAZOUANI, Abdelnasser, 59810 Lesquin (FR); JACQUES, Philippe, 4000 Liège (BE)
(74) Mandataire: IP Trust
(86) Numéro de dépôt international: PCT/FR2017/053865
(87) Numéro de publication internationale: WO 2018/122541

(56) Documents cités:
- WO-A1-2013/110132
- WO-A1-2016/109332
- WO-A1-2016/109395
- WO-A2-2016/038460

## Description

La présente invention a trait au domaine des biostimulants utilisés en agriculture pour favoriser la croissance des plantes. En particulier, la présente invention concerne l'utilisation de lipopeptides en tant qu'agent biostimulant de la croissance des plantes.

Les semences enrobées d'une composition biostimulante font également partie de l'invention.

### ETAT DE LA TECHNIQUE

L'augmentation de la demande alimentaire du fait de l'accroissement continuel de la population mondiale constitue un réel défi pour S'avenir. Les biostimulants peuvent contribuer efficacement à relever ce défi et sont de plus en plus utilisés dans la production agricole mondiale.

La rapidité avec laquelle les racines d'une plante atteignent les éléments nutritifs constitue un paramètre déterminant dans le succès du développement et de la croissance initiaux de la plante, c'est-à-dire généralement au cours des premières semaines. Les biostimulants permettent d'améliorer la croissance des plantes en leur apportant des éléments nutritifs à base de produits naturels ou en aidant les plantes à accéder à leur nutriments,

Les biostimulants favorisent la croissance et le développement des plantes durant tout le cycle de vie de la culture, de la germination des graines à la maturité des plantes. Ils permettent d'améliorer l'efficacité du métabolisme des plantes conduisant à une augmentation de la récolte et une meilleure qualité, Ils augmentent la tolérance des plantes aux stress abiotiques et la capacité de s'en remettre. Ils facilitent l'assimilation, le passage et l'utilisation des nutriments. Ils améliorent la qualité de la production agricole, y compris la teneur en sucre, la couleur et la taille du fruit. De plus, ils régulent et améliorent la teneur en eau des plantes. Ils accroissent enfin certaines propriétés physico-chimiques du sol et favorisent le développement des micro-organismes du terrain.

L'utilisation de microorganismes ou de cocktails de micro-organismes pour la biostimulation des plantes est bien connue. Ces méthodes reposent sur l'application de compositions contenant un microorganisme purifié ou un mélange de microorganismes, De telles compositions contiennent notamment des souches de *Bacillus.*

Les compositions biostimulantes de la croissance des plantes décrites dans la littérature contiennent des souches de *Bacillus* purifiées, seules ou en association avec d'autres composants. A titre d'exemple, la demande WO2016/109332 décrit des compositions contenant une culture biologiquement pure de la souche D747 de *Bacillus* sp. (déposée sous le nom de FERM BP-8234). La demande WO2016/108976 décrit des compositions contenant une culture biologiquement pure de la souche de *Bacillus pumilus* rti279 (déposée après de l'ATCC sous le numéro PTA-121164) qui peuvent être appliquées seules ou en association avec des agents chimiques ou d'autres agents microbiens, ou les deux, pour favoriser la croissance des plantes et pour leur conférer une protection et/ou pour lutter contre les maladies végétales.

De telles compositions présentent néanmoins des inconvénients. Pour que la composition soit active, il est souhaitable que le microorganisme soit vivant et capable de se multiplier sur la plante ; or ces conditions sont difficilement contrôlables. De plus, dans un contexte agricole dans lequel les solutions écologiques sont favorisées, l'utilisation de souches de microorganismes génétiquement modifiées pose problème. WO2016/109395 décrit l'utilisation d'extraits bactériens entre autres pour stimuler la croissance des plantes et décrit également la présence de lipopeptides dans ces extraits. En revanche, ce document n'impute pas l'effet stimulant à ces lipopeptides.

La présente invention apporte une solution à ces problèmes.

En effet, les inventeurs ont montré de façon surprenante qu'une composition contenant des lipopeptides mentionnés à la revendication 1 peut être utilisée pour stimuler la croissance des plantes. Une préparation à base de ces lipopeptides présente le double avantage d'être active elle-même sans nécessiter une production *in situ* de molécules biostimulantes et d'être dépourvue d'OGM. Aucun des documents de l'art antérieur ne décrit l'utilisation d'une telle préparation contenant des lipopeptides pour la stimulation de la croissance des plantes. Ainsi, la présente invention propose une approche innovante en vue de la biostimulation de la croissance des plantes.

### DESCRIPTION DETAILLEE DE L'INVENTION

Un premier objet de l'invention concerne l'utilisation d'au moins un lipopeptide en tant qu'agent biostimulant de la croissance des plantes.

En effet, les inventeurs ont, pour la première fois, mis en évidence l'effet biostimulant des lipopeptides sur la croissance des plantes en montrant l'effet stimulant d'une préparation de lipopeptides purifiés. Ainsi, ils proposent d'utiliser les lipopeptides en tant qu'agent biostimulant. L'agent biostimulant peut être une composition obtenue à partir d'un surnageant d'au moins une souche de *Bacillus* sp, une composition concentrée en lipopeptides ou une composition comprenant des lipopeptides purifiés.

Les lipopeptides peuvent être purifiés, concentrés ou contenus dans un surnageant d'une culture de *Bacillus* sp. à l'exclusion des cellules productrices. Dans un mode de réalisation préféré, la composition biostimulante utilisée correspond à une composition concentrée en lipopeptides ou une composition comprenant des lipopeptides purifiés.

Tel qu'utilisé ici, le terme « surnageant » correspond au surnageant ou à un extrait de surnageant d'au moins une souche de *Bacillus* sp.

Tel qu'utilisé ici, le terme « composition concentrée en lipopeptides » correspond à une solution ou composition obtenue par concentration d'un surnageant de culture d'au moins une souche de *Bacillus* sp.

Tel qu'utilisé ici, le terme « composition comprenant des lipopeptides purifiés » correspond à solution ou composition obtenue par purification des lipopeptides à partir d'une solution contenant des lipopeptides telle qu'un surnageant de culture d'au moins une souche de *Bacillus* sp. ou une composition concentrée en lipopeptides.

Dans ces différentes compositions, la nature et la quantité et la pureté des lipopeptides peuvent varier.

Telle que définie ici, une « composition biostimulante » correspond à une composition (ou solution ou préparation) apte à améliorer la croissance des plantes. Les critères d'évaluation de la croissance applicables sont multiples ; certains critères sont décrits dans la partie expérimentale. Il s'agit par exemple d'évaluer le gain en terme de temps de germination, de taille racinaire, de biomasse ou de hauteur des plantes attribuables à l'application de la composition biostimulante. Afin de vérifier si une telle préparation présente des propriétés biostimulantes, ledit surnageant peut être appliqué sur les parties supérieures de la plante par arrosage et/ou au niveau des racines par arrosage et/ou trempage ou encore par enrobage/trempage des semences.

Les souches de *Bacillus sp.* sont connues pour leur capacité à produire des lipopeptides. Les souches de *Bacillus* qui peuvent être utilisées dans le cadre de la présente invention sont des souches naturelles ou des souches génétiquement modifiées.

Dans un mode de réalisation particulier, les souches de *Bacillus sp.* sont choisies parmi *Bacillus subtilis, Bacillus amyloliquefaciens, Bacillus licheniformis, Paenibacillus polymixa, Bacillus pumilus, Bacillus thuringiensis, Bacillus sphaericus, Bacillus coagulans, Bacillus mycoides, Bacillus velenzensis* et *Bacillus firmus, Bacillus methylotrophicus, Bacillus megaterium, Bacillus vallismortis.*

Avantageusement, les souches de *Bacillus* sont choisies parmi les souches de *Bacillus subtilis* et de *Bacillus amyloliquefaciens* (récemment reconnu comme *Bacillus velenzensis*). Dans un mode de réalisation préféré, les souches *B. subtilis* sont choisies parmi les souches ATCC 6633, ATCC 21332, 168, ATCC 9943 et NCIB 3610 et leurs dérivés ; les souches de *B. amyloliquefaciens* sont choisies parmi les souches FZB42 et LMG S-29032 (aussi appelée GA1) et leurs dérivés.

Dans un autre mode de réalisation particulier, la composition biostimulante est obtenue par concentration du surnageant. Ainsi, la composition concentrée peut correspondre à une concentration d'au moins un facteur 2, voire d'une facteur 5 ou 10 par rapport au surnageant récolté, de manière préférée d'au moins un facteur 20, et de manière encore plus préférée d'au moins un facteur 50. La composition biostimulante peut aussi être obtenue par purification des lipopeptides contenus dans le surnageant. Ainsi, il est possible de proposer des solutions biostimulantes dont la composition est déterminée tant qualitativement (nature des lipopeptides présents) que quantitativement.

Une composition biostimulante utilisée selon l'invention peut également être définie par sa teneur en lipopeptides. Ainsi, dans un mode de réalisation préféré, une préparation de lipopeptides selon l'invention peut contenir des lipopeptides à une concentration d'au moins 10 mg/L (0,001%), 20 mg/L, 50 mg/L, 100 mg/L (0,01 %), 200 mg/L, 500 mg/L, 1 g/L (0,1%), 2 g/L, 5 g/L (0,5%), 10 g/L (1 %), 20 g/L, 50 g/L de préférence entre 1% et 7 %, notamment de 1%, 2%, 3%, 4%, 5%, 6% ou 7%, et de manière encore plus préférée d'au moins 10%, voire d'au moins 20%, sachant qu'une solution à 1% correspond à concentration de 10g/L.

Une composition concentrée en lipopeptides ou une composition comprenant des lipopeptides purifiés peut comprendre entre 0,002% et 15% de lipopeptides dont la pureté peut varier. En particulier, de telles compositions peuvent présenter une pureté en lipopeptides supérieure ou égale à 10%, de manière préférée supérieure ou égale à 15%, 20%, 30%, 40% ou 50%. Dans un mode de réalisation particulièrement préféré, ces compositions présentent une pureté en lipopeptides supérieure ou égale à 60%, de manière préférée supérieure ou égale à 70%, 75%, 80%, 85%, 90%, 95%, 99%, voire de 100%.

Parmi les lipopeptides présentant des propriétés biostimulantes de la croissance des plantes, les lipopeptides de la famille des iturines, des surfactines, des fengycines, des kurstakines et des locillomycines sont particulièrement intéressants dans le cadre de la présente invention.

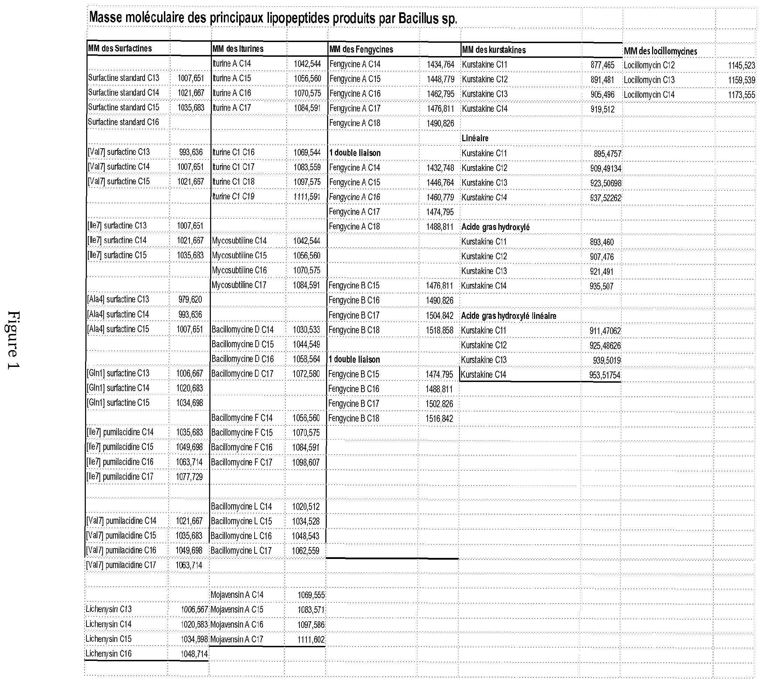

La composition biostimulante est définie par sa teneur en molécules appartenant à la famille des iturines et/ou en molécules appartenant à la famille des surfactines et/ou molécules appartenant à la famille des fengycines et/ou des molécules appartenant à la famille des kurstakines et/ou des molécules appartenant à la famille des locillomycines (voir Tableau de la Figure 1).

Par « molécules de la famille des iturines », on entend l'iturine A, la mojavensine, la mycosubtiline, et les bacillomycines A, B, C, D, F et L.

Par « molécules de la famille des surfactines », on entend les surfactines A, B, C, la lichenysine et la pumilacidine.

Par « molécules de la famille des fengycines », on entend les fengycines A et B, les plipastatines A et B et l'agrastatine.

Ainsi, une composition biostimulante utilisée selon l'invention peut par exemple contenir entre 0,002 et 25% de lipopeptides, en particulier entre 1 et 15% de lipopeptides.

Dans un premier mode de réalisation, cette composition comprend entre 0,002 et 25% de lipopeptides dans les proportions suivantes : molécules appartenant à la famille des iturines 10-90%, molécules appartenant à la famille des surfactines 10-90%, molécules appartenant à la famille des fengycines 0-50%.

Dans un second mode de réalisation, cette composition comprend entre 0,002 et 25% de lipopeptides dans les proportions suivantes : molécules appartenant à la famille des iturines 0-100%, molécules appartenant à la famille des surfactines 0-100%, molécules appartenant à la famille des fengycines 0-100%.

Une autre composition biostimulante utilisée selon l'invention peut contenir entre 0,002 et 25% de lipopeptides, de préférence entre 1 et 15% de lipopeptides, dans les proportions suivantes :
- 100% de surfactine
- 100% de fengycine
- 100% d'iturine, notamment de mycosubtiline
- un mélange d'iturine et de surfactine
- un mélange de mycosubtiline et de surfactine
- un mélange d'iturine et de fengycine
- un mélange de mycosubtiline et de fengycine
- un mélange de surfactine et de fengycine
- une mélange d'iturine, notamment de mycosubtiline, de surfactine et de fengycine.

Une composition utilisée selon l'invention peut également contenir des métabolites primaires produits par ladite souche, comme par exemple l'acétoine, le 2-3 butanediol, des précurseurs de l'auxine et/ou des enzymes solubilisant le phosphate.

Des exemples de compositions utilisées selon l'invention sont décrits dans la partie expérimentale.

Des compositions de lipopeptides concentrées sont décrites à l'exemple 2. Des compositions obtenues par concentration de surnageant de culture et comprenant soit 175 mg/L de d'iturine, notamment d'iturine, notamment de mycosubtiline, et 75 mg/L de surfactine A, soit 700 mg/L d'iturine, notamment de mycosubtiline, et 300 mg/L de surfactine A, permettent d'augmenter de manière significative la taille des plants de tomates ainsi que la quantité de biomasse fraiche des parties aériennes de telles plantes. Ces deux compositions permettent également d'augmenter de manière significative la quantité de biomasse fraiche des parties aériennes et racinaires plants de blé. Une autre composition comprenant 350 mg/L d'iturine, notamment de mycosubtiline, et 150 mg/L de surfactine A permet d'augmenter de manière significative la quantité de biomasse fraiches des parties aériennes et racinaires plants de blé ainsi que la teneur en chlorophylle des parties aériennes de ces plantes.

Des compositions de lipopeptides purifiés utilisées selon l'invention sont décrites aux exemples 3 et 4. Des compositions comprenant de l'iturine purifiée, notamment de la mycosubtiline purifiée (à 99%), ou de la fengycine purifiée (99%) ou un mélange d'iturine, notamment de mycosubtiline, et de surfactine (à 79%) ont un effet significatif sur la croissance des racines, notamment suite à un traitement de graines de tomates (voir exemple 3).

Des compositions comprenant des lipopeptides purifiés entre 30% et 99% dans des proportions relatives de 80% d'iturine, notamment de mycosubtiline, et de 20% de surfactine permettent d'améliorer la résistance au stress hydrique, notamment de plants de tomates. Ces effets biostimulants des compositions se traduisent par un gain de hauteur des plants de tomate entre le début et la fin du stress hydrique, une meilleure efficience photosynthétique et une meilleure conductance stomatique (voir exemple 4).

Afin de faciliter la pénétration de la préparation dans la plante, la composition utilisée selon l'invention peut également contenir des adjuvants. De manière avantageuse, l'adjuvant facilite la pénétration de la composition biostimulante dans la plante. Le choix de l'adjuvant est guidé par l'effet recherché. A titre d'exemple, les mouillants augmentent la surface de contact entre la feuille et la gouttelette en étalant la matière biostimulante et assurent la rétention du produit sur la cuticule. Les huiles quant à elles favorisent la pénétration des matières biostimulantes en « cassant » la barrière des couches de cires épicuticulaires de la plante ; cela devient un inconvénient quand on sait que l'huile va agir de la même façon sur les cuticules des plantes cultivées au point de risquer de fragiliser ses défenses naturelles contre les champignons pathogènes. D'autres adjuvants comme les pénétrants sont des mouillants imprégnant les cuticules cireuses en respectant leur intégrité. Les sels peuvent également être utilisés comme adjuvants notamment pour absorber l'humidité de l'air et lutter ainsi contre la dessiccation. Enfin, les adhésifs fixent la matière biostimulante sur les feuilles et limitent le lessivage et la volatilisation. Les adjuvants sont donc à adapter aux modes d'action des matières abiostimulantes (racinaires, contact, systémique ou pénétrant), aux types de formulations des produits et aux types de plantes ciblées (feuilles glabres ou velues, épaisseur des cuticules, stades des plantes, positions des stomates ...).

De manière avantageuse, les adjuvants sont choisis parmi les surfactants polymériques chargés ou non, les alkylpolyglucosides et alkylpolyglucosides ester, les dérivés naphtalene-sulfonates, les dérivés cellulosiques, les polysaccharides naturels, les émulsions à base de silicone...

La composition biostimulante utilisée selon l'invention peut, dans un autre mode de réalisation, contenir également des cellules, à condition que ces cellules ne correspondent pas à la souche ou aux souches particulière(s) ayant produit le surnageant. Les cellules ajoutées à la préparation peuvent présenter des propriétés particulières permettant de renforcer l'effet biostimulant de la préparation de surnageant ou des propriétés additionnelles, notamment antifongiques. Ainsi, de telles cellules peuvent être choisies parmi une souche de *Bacillus* sp. distincte de celle ayant été utilisée pour produire le surnageant, en particulier parmi les souches *Bacillus subtilis, Bacillus amyloliquefaciens, Bacillus licheniformis, Paenibacillus polymixa, Bacillus pumilus, Bacillus thuringiensis, Bacillus sphaericus, Bacillus coagulans, Bacillus mycoides, Bacillus firmus, Bacillus velenzensis, Bacillus methylotrophicus, Bacillus megaterium, Bacillus vallismortis.* De telles cellules peuvent aussi ne pas être des souches de type *Bacillus* mais de type *Paenibacillus sp., Pseudomonas* sp. *(Pseudomonas cepacia, Pseudomonas fluorescens, Pseudomonas chlororaphis, Pseudomonas syringae), Streptomyces sp. (Streptomyces griseoviridis, Streptomyces lydicus).* De telles cellules peuvent être aussi des levures, des champignons mycorhiziens ou de type *Trichoderma* sp. ou *Pythium* sp....

On peut obtenir une préparation biostimulante de la croissance des plantes par les étapes de (i) mise en culture d'au moins une souche de *Bacillus* sp., (ii) incubation dans un milieu de culture approprié pour la sécrétion de molécules dans le surnageant et (iii) récolte du surnageant. Dans ce procédé, le surnageant ou un extrait dudit surnageant peut être utilisé directement comme agent biostimulant.

Le temps d'incubation ainsi que le milieu de culture sont choisis en fonction des souches à cultiver ; l'homme du métier saura adapter ces paramètres.

Dans un mode de réalisation particulier, la ou les souche(s) de *Bacillus* mise(s) en oeuvre dans ce procédé est/sont de préférence choisie(s) parmi *Bacillus sp. Bacillus subtilis, Bacillus amyloliquefaciens, Bacillus licheniformis, Paenibacillus polymixa, Bacillus pumilus, Bacillus thuringiensis, Bacillus coagulans, Bacillus mycoides, Bacillus sphaericus, Bacillus velenzensis, Bacillus firmus, Bacillus methylotrophicus, Bacillus megaterium, Bacillus vallismortis.* Avantageusement, les souches de *Bacillus* sont choisies parmi les souches de *Bacillus subtilis* et de *Bacillus amyloliquefaciens.* Dans un mode de réalisation préféré, les souches *B. subtilis* sont choisies parmi les souches ATCC 6633, ATCC 21332, 168, ATCC 9943 et NCIB 3610 et leurs dérivés ; les souches de *B. amyloliquefaciens* sont choisies parmi les souches FZB42 et LMG S-29032 et leurs dérivés.

En outre, ce procédé peut comprendre une étape de concentration du surnageant. La concentration de la préparation peut être obtenue en utilisant l'une des techniques bien connues de l'homme du métier. A titre d'exemple, la préparation peut être concentrée soit par ultrafiltration sur membrane, soit par évaporation, soit par précipitation physico-chimique, soit par extraction.

Alternativement, ce procédé peut comprendre une étape de purification des lipopeptides. L'étape de purification permet d'obtenir des lipopeptides purifiés soit pour produire une solution ne contenant d'un seul type de lipopeptides, soit pour produire une solution contenant une combinaison de lipopeptides différents. La purification des lipopeptides peut être obtenue en utilisant l'une des techniques bien connues de l'homme du métier. A titre d'exemple, on pourra citer l'enchaînement séquentiel d'étapes d'ultrafiltration de diafiltration et de purification finale à l'aide de solvants organiques tels que le methanol, l'éthanol, le butanol, l'acétate d'ethyle, le chloroforme, seul ou en mélange. D'une autre manière alternative la purification des lipopeptides pourra être réalisé par précipitation acide ou en utilisant des sels de cations mono ou divalent (comme par exemple des sels d'ammonium, de magnésium, de calcium, de sodium...).

La composition biostimulante ainsi obtenue peut être déshydratée sous forme d'une poudre pour faciliter sa conservation, son stockage et son transport. Ainsi une composition biostimulante telle que définie précédemment peut être obtenue par dissolution d'une poudre de surnageant pour obtenir la concentration souhaitée en molécules d'intérêt, en particulier en lipopeptides.

Dans un mode de réalisation particulier, la préparation biostimulante peut être appliquée par traitement foliaire afin d'obtenir un gain significatif de matière foliaire et/ou racinaire et/ou fruitière et/ou légumière et/ou céréalière. Ce traitement peut être appliqué par exemple par pulvérisation de la composition biostimulante.

Dans un autre mode de réalisation particulier, la composition biostimulante peut être appliquée par traitement racinaire afin d'obtenir un gain significatif de matière foliaire et/ou racinaire et/ou fruitière et/ou légumière et/ou céréalière. Ce traitement peut être appliqué par exemple par arrosage à l'aide de la préparation biostimulante.

Dans un autre de mode de réalisation, la composition biostimulante peut être appliquée par traitement des semences afin d'obtenir un gain significatif de matière foliaire et/ou racinaire et/ou fruitière et/ou légumière et/ou céréalière. Ce traitement peut être appliqué par exemple par enrobage à l'aide de la préparation biostimulante.

Des bulbes ornementaux peuvent être traités à l'aide d'une composition biostimulante utilisée dans la présente invention afin d'obtenir un gain significatif de matière foliaire.

L'enrobage d'une semence végétale est destiné en particulier à améliorer la croissance initiale de la plante.

### DESCRIPTION DES FIGURES

**Figure 1** **: Tableau descriptif des masses moléculaires des principaux lipopeptides produits par *Bacillus sp.***

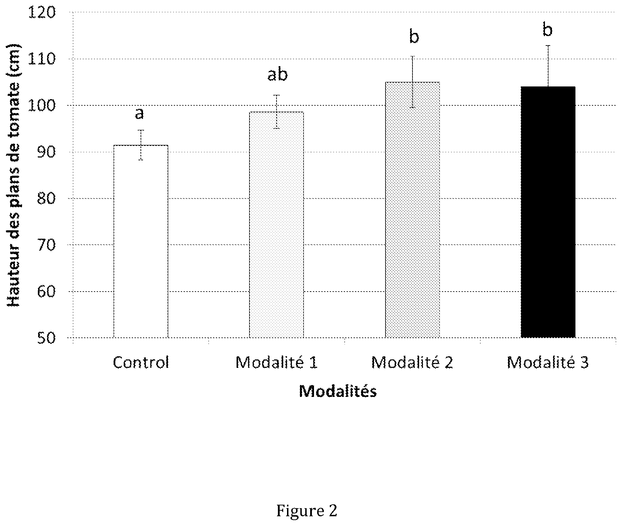

**Figure 2** **: Mesure de la hauteur des plants de tomates après application de compositions concentrées dérivées de surnageant de culture de *Bacillus sp.*** Les hauteurs des plants ont été mesurés après application de compositions contenant :(**modalité 1**) composition issue de surnageant de *Bacillus amyloliquefaciens* contenant des concentrations finales pour le traitement en iturine A de 90 mg/L, en fengycine A et B de 100 mg/L et en surfactine A de 60 mg/L ; (**modalité 2**) composition issue de surnageant de *Bacillus subtilis* contenant des concentrations finales pour le traitement en mycosubtiline de 175 mg/L et en surfactine A de 75 mg/L ; (**modalité 3**) composition issue de surnageant de *Bacillus subtilis* contenant des concentrations finales pour le traitement en mycosubtiline de 700 mg/L et en surfactine A de 300 mg/L. L'analyse révèle un effet significatif du traitement sur la hauteur de la plante (P=0,0029). Les groupes statistiques sont indiqués sur le graphique par les lettres a et b.

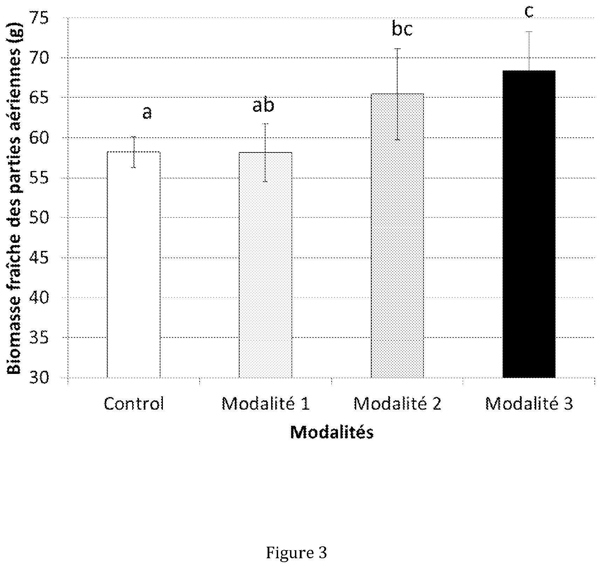

**Figure 3** : **Mesure du poids de la biomasse fraîche des parties aériennes des plants de tomates après application de compositions concentrées dérivées de surnageant de culture de *Bacillus sp.*** Les poids de la biomasse fraîche des parties aériennes des plants de tomates ont été mesurés après application de compositions contenant :(**modalité 1**) composition issue de surnageant de *Bacillus amyloliquefaciens* contenant des concentrations finales pour le traitement en iturine A de 90 mg/L, en fengycine A et B de 100 mg/L et en surfactine A de 60 mg/L ; (**modalité 2**) composition issue de surnageant de *Bacillus subtilis* contenant des concentrations finales pour le traitement en mycosubtiline de 175 mg/L et en surfactine A de 75 mg/L ; (**modalité 3**) composition issue de surnageant de *Bacillus subtilis* contenant des concentrations finales pour le traitement en mycosubtiline de 700 mg/L et en surfactine A de 300 mg/L. L'analyse révèle un effet significatif du traitement sur la hauteur de la plante (P=0,0029). Les groupes statistiques sont indiqués sur le graphique par les lettres a, b et c.

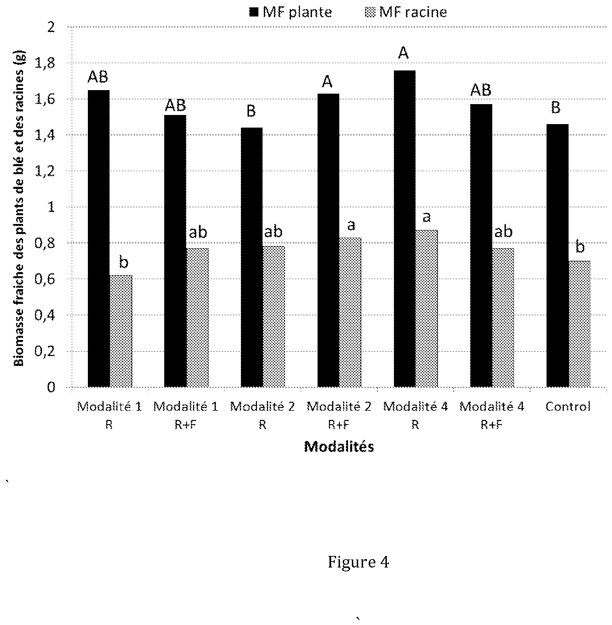

**Figure 4** **: Mesure de l'augmentation de la matière humide et des racines de plants de blé après application de compositions concentrées dérivées de surnageant de culture de *Bacillus sp.***
   Les poids de la biomasse fraîche des parties aériennes et racinaires des plants de blé ont été mesurés après application uniquement en racinaire (R) ou en racinaire et foliaire (R+F) de compositions contenant **:(modalité 1)** composition issue de surnageant de *Bacillus amyloliquefaciens* contenant des concentrations finales pour le traitement en iturine A de 90 mg/L, en fengycine A et B de 100 mg/L et en surfactine A de 60 mg/L ; (**modalité 2**) composition issue de surnageant de *Bacillus subtilis* contenant des concentrations finales pour le traitement en mycosubtiline de 175 mg/L et en surfactine A de 75 mg/L ; (**modalité 4**) composition issue de surnageant de *Bacillus subtilis* contenant des concentrations finales pour le traitement en mycosubtiline de 350 mg/L et en surfactine A de 150 mg/L. Les groupes statistiques sont indiqués sur le graphique par les lettres A et B pour l'effet biostimulant sur les parties aériennes des plants de blé et par les lettres a et b pour l'effet biostimulant sur les parties racinaires des plants de blé.

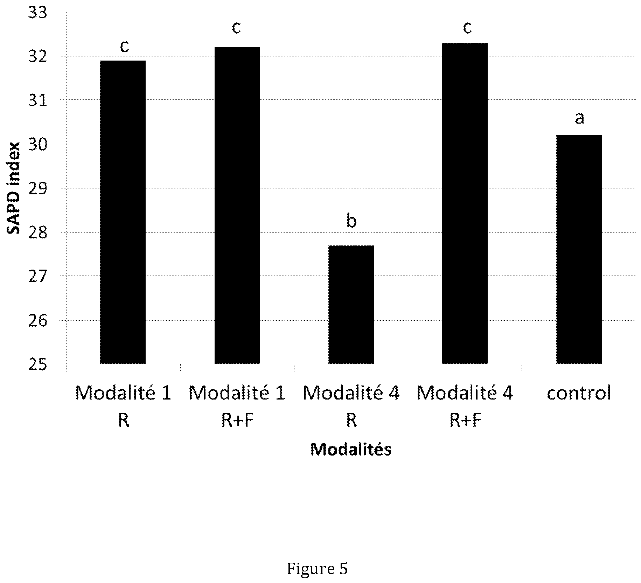

**Figure 5** **: Mesure de l'augmentation de la teneur en chlorophylle des plants de blé après application de compositions concentrées dérivées de surnageant de culture de *Bacillus sp.*** La teneur en chlorophylle des parties aériennes des plants de blé a été mesurées après application uniquement en racinaire (R) ou en racinaire et foliaire (R+F) de compositions contenant **:(modalité 1)** composition issue de surnageant de *Bacillus amyloliquefaciens* contenant des concentrations finales pour le traitement en iturine A de 90 mg/L, en fengycine A et B de 100 mg/L et en surfactine A de 60 mg/L ; (**modalité 4**) composition issue de surnageant de *Bacillus subtilis* contenant des concentrations finales pour le traitement en mycosubtiline de 350 mg/L et en surfactine A de 150 mg/L. Les groupes statistiques sont indiqués sur le graphique par les lettres a, b et c.

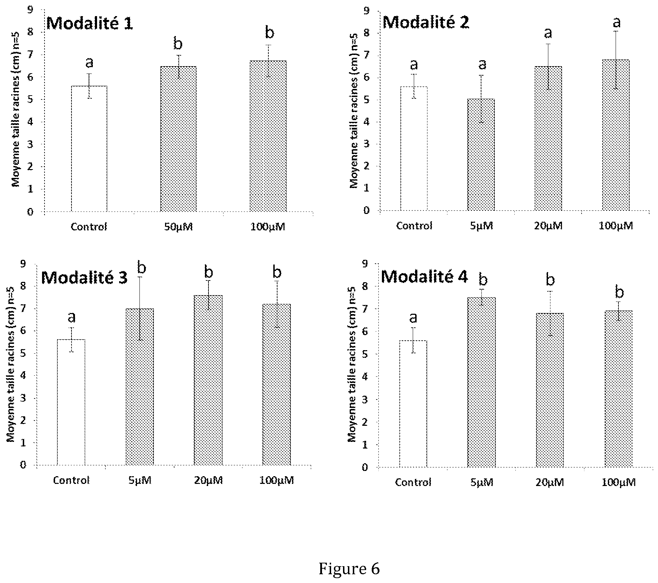

**Figure 6** **: Mesure de la longueur racinaire des graines de tomates après un traitement de trempage/enrobage avec des compositions comprenant des lipopeptides purifiés.**
   La longueur des racines des graines de tomates a été mesurés après application de compositions contenant : (**modalité 1)** Surnageant de culture de *Bacillus subtilis* concentré et purifié contenant 99% de mycosubtiline ; (**modalité 2)** Surnageant de culture de *Bacillus subtilis* concentré et purifié contenant 99% de surfactine ; (**modalité 3)** Surnageant de culture de *Bacillus subtilis* concentré et purifié contenant 99% de fengycine ; (**modalité 4)** Surnageant de culture de *Bacillus subtilis* concentré et purifié contenant 79% d'un mélange de mycosubtiline et de surfactine ; Chaque modalité est comparée à une condition **Control** qui correspond à un témoin traité avec le même volume d'une solution de DMSO à 0,1%. Les groupes statistiques sont indiqués sur le graphique par les lettres a, b.

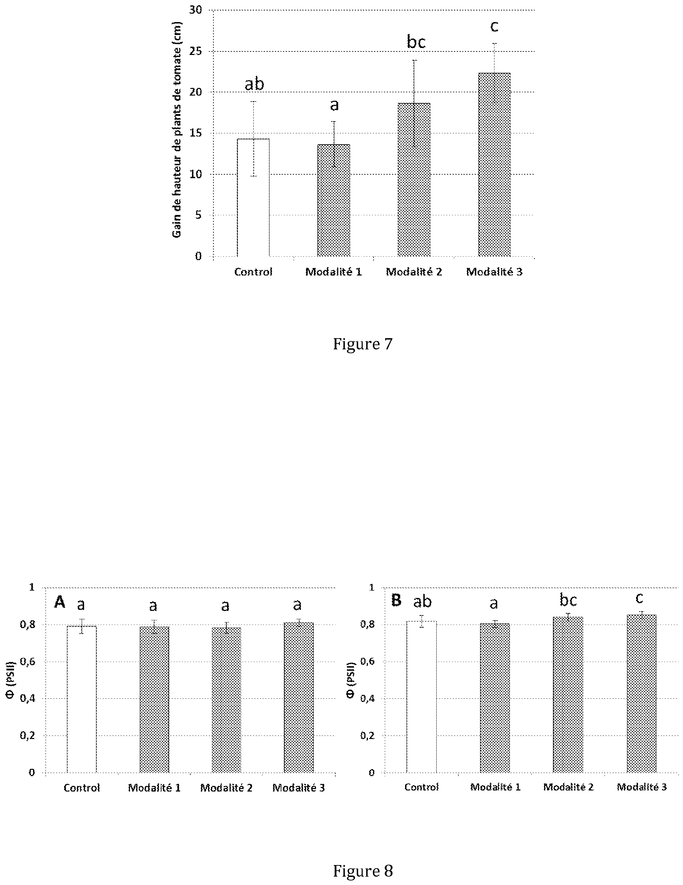

**Figure 7** **: Mesure du gain de croissance des plants de tomate traités par des compositions comprenant des lipopeptides purifiés entre le début et la fin de la période de stress hydrique.**
   La taille des plants de tomate a été mesurée à la fin de la période de stress hydrique et comparée à la taille en début de période afin d'estimer le gain après application de compositions contenant : **(modalité 1)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 75g/ha en lipopeptides ; **(modalité 2)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 150g/ha en lipopeptides ; **(modalité 3)** Surnageant de culture de *Bacillus subtilis* concentré et purifié à une pureté de 99% (masse de lipopeptides/masse totale sèche) et dont les proportions relatives sont de 80% de mycosubtiline et de 20% de surfactine. Cette composition est appliquée à raison de 150g/ha en lipopeptides ; Chaque modalité est comparée à une condition **Control** qui correspond à un témoin traité avec le même volume d'une solution d'eau distillée. Les groupes statistiques sont indiqués sur le graphique par les lettres a, b et c.
**Figure 8** **: Mesure de l'efficience photosynthétique des plants de tomate traités par des compositions comprenant des lipopeptides purifiés entre le début et la fin de la période de stress hydrique.**
   L'efficience photosynthétique a été mesurée par fluorimétrie PAM au début et à la fin du stress hydrique et après application de compositions contenant : **(modalité 1)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 75g/ha en lipopeptides ; **(modalité 2)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 150g/ha en lipopeptides ; **(modalité 3)** Surnageant de culture de *Bacillus subtilis* concentré et purifié à une pureté de 99% (masse de lipopeptides/masse totale sèche) et dont les proportions relatives sont de 80% de mycosubtiline et de 20% de surfactine. Cette composition est appliquée à raison de 150g/ha en lipopeptides ; Chaque modalité est comparée à une condition **Control** qui correspond à un témoin traité avec le même volume d'une solution d'eau distillée. Le graphique noté A correspond à la mesure au début du stress hydrique et le graphique noté B correspond à la mesure en fin du stress hydrique. Les groupes statistiques sont indiqués sur le graphique par les lettres a, b et c.

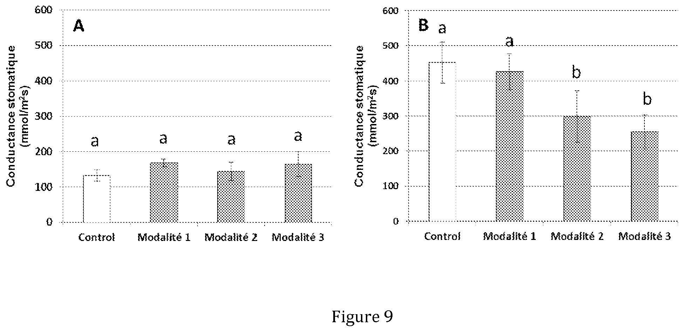

**Figure 9** **: Mesure de la conductance stomatique des plants de tomate traités par des compositions comprenant des lipopeptides purifiés entre le début et la fin de la période de stress hydrique.**
   La conductance stomatique a été analysée avec un poromètre permettant la mesure du débit de passage de dioxyde de carbone (CO) ou de vapeur d'eau par les stomates d'une feuille, au début et à la fin du stress hydrique et après application de compositions contenant : **(modalité 1)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 75g/ha en lipopeptides ; **(modalité 2)** Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 150g/ha en lipopeptides; **(modalité 3)** Surnageant de culture de *Bacillus subtilis* concentré et purifié à une pureté de 99% (masse de lipopeptides/masse totale sèche) et dont les proportions relatives sont de 80% de mycosubtiline et de 20% de surfactine. Cette composition est appliquée à raison de 150g/ha en lipopeptides ; Chaque modalité est comparée à une condition **Control** qui correspond à un témoin traité avec le même volume d'une solution d'eau distillée. Le graphique noté **A** correspond à la mesure au début du stress hydrique et le graphique noté **B** correspond à la mesure en fin du stress hydrique. Les groupes statistiques sont indiqués sur le graphique par les lettres a et b.

### EXEMPLES

### Exemple 1 : Préparation d'une composition biostimulante

### 1.a Préparation d'un surnageant de culture

Le surnageant de culture est obtenu à partir d'un procédé de fermentation aérobie d'une souche *Bacillus* dérivée de la souche *Bacillus subtilis* ATCC 6633 ou de la souche *Bacillus amyloliquefaciens* LMG S-29032. La culture est réalisée dans un milieu contenant une source de carbone (glucose, saccharose,...), une source d'azote (sulfate ammoniaque, peptone...) et des oligoéléments sous agitation à 30°C. Le pH est maintenu à une valeur de 7. La culture est récoltée après 48 à 72h. Elle est ensuite centrifugée ou filtrée pour éliminer les cellules. Le surnageant de culture est prêt à être concentré. Le pourcentage de lipopeptides à ce stade est de l'ordre de 0,05 à 0,5% (poids/volume).

### 1.b Préparation d'une préparation biostimulante concentrée

### - Par filtration tangentielle

Le surnageant de culture obtenu via, par exemple, la préparation présentée en 1.a est concentré via ultrafiltration tangentielle en utilisant une membrane dont le seuil de coupure peut être de 1KDa à 100 KDa. Pour exemple, 1000L de surnageant de culture obtenu comme décrit précédemment sont concentrés par passage sur la membrane pour obtenir un retentât d'un volume de 10 à 100L.

### - Par précipitation à pH acide

Un second exemple de préparation d'une préparation biostimulante concentrée consiste en une diminution du pH dans le but de précipiter les lipopeptides. Une addition d'acide sulfurique concentré est réalisée sur le surnageant obtenu, par exemple, via la préparation présentée en 1.a. Après l'obtention d'un pH final aux alentours de 1, la solution est laissée sous agitation de 2 à 12h. Une centrifugation permet de récupérer un culot de matière contenant les lipopeptides. Ce culot est ensuite dissous par addition d'eau et de soude afin d'obtenir une valeur de pH comprise entre 7 et 8,5. Pour exemple, lorsque le culot est obtenu à partir de 1000L de surnageant de culture, ce culot peut être repris dans un volume de 10 à 100L total.

Le pourcentage de lipopeptides à l'issue de l'un de ces deux exemples de préparation est de l'ordre de 1 à 15% (poids/volume).

### Exemple 2 : Effet biostimulant de la composition obtenue à partir du surnageant de culture de Bacillus sur la croissance des plantes

### 2.a Analyse des composés présents dans le surnageant

La capacité de la composition à être utilisée en tant que composition biostimulante, peut être vérifiée à l'aide de méthodes analytiques. La présence de lipopeptides, de métabolites primaires ou d'enzymes issus de la culture de *Bacillus* dans la composition peut en effet être mesurée par différentes méthodes connues de l'homme du métier, notamment par chromatographie en phase liquide couplée à la spectrométrie de masse (ou LC-MS), par chromatographie en phase liquide à haute performance (HPLC) ou par méthodes colorimétriques.

### 2.b Méthode d'évaluation de l'effet biostimulant sur les plantes

L'effet biostimulant de la composition peut être évalué directement sur la plante en analysant des paramètres de croissance. A cet effet, le surnageant de culture ou la composition qui en dérive peuvent être appliqués sur les parties supérieures de la plante, au niveau des racines par arrosage, ou par trempage des semences. Ces modes d'application peuvent également être combinées entre elles. L'effet biostimulant est évalué après une phase de croissance.
L'effet biostimulant est obtenu si au moins un des critères suivants est satisfait :
- Augmentation des tailles de la plante (en hauteur ou en épaisseur)
- Augmentation des biomasses fraiches et/ou sèches des fruits de la plante
- Augmentation des biomasses fraiches et/ou sèches des parties aériennes de la plante
- Augmentation des biomasses fraiches et/ou sèches des racines de la plante
- Augmentation du nombre de nœuds, du nombre d'épi pour des cultures céréalières
- Augmentation de la longueur du système racinaire de la plante
- Augmentation du rendement céréalier, légumier et/ou fruitier
- Augmentation de la teneur en chlorophylle
- Augmentation de la résistance à un stress abiotique : par exemple lors d'un stress hydrique : augmentation de l'efficience photosynthétique, de la conductance stomatique...

### 2.c Effet des compositions comprenant des lipopeptides sur l'augmentation de la hauteur de plants de tomates.

### Matériel et Méthodes

L'essai est réalisé en serre de culture pour assurer des conditions semi-contrôlées de température et d'ensoleillement :
- Température : 25°C le jour / 20°C la nuit
- Photopériode : 14h de jour / 10h de nuit
La serre est régulée pour une luminosité minimale de 175 W/m². En dessous de cette luminosité, l'éclairage s'allume et compense la valeur de luminosité. L'ombrage, lui, se déploie au-delà d'une luminosité de 500 W/m2 et se replie sous 450 W/m².

Chaque modalité est évaluée sur 5 plants de tomate préalablement repiqués au stade 2 feuilles dans un sol agricole sableux. Une fertilisation initiale est effectuée deux jours avant repiquage par une solution d'Hakaphos rouge 8-12-24 apporté à raison de 0,2 g par plant de tomate.
Le mode d'usage testé dans cet essai d'efficacité biostimulante correspond à un apport du produit au pied des plants à la transplantation de la tomate et après 3 semaines de culture en pulvérisation foliaire en considérant un volume pulvérisé de 200L/ha.

Les compositions testées sont les suivantes :
- Surnageant de culture de *Bacillus amyloliquefaciens* concentré d'un facteur 20 et dilué d'un facteur 40 pour obtenir une concentration de 50g/ha en lipopeptides dont les proportions relatives sont de 36% pour la famille des Iturines (ici iturine A) et de 24% pour la famille des surfactines (ici surfactine A) et de 40% pour la famille des fengycines (ici fengycine A et B) (modalité 1),
- Surnageant de culture de *Bacillus subtilis* concentré d'un facteur 20 et dilué d'un facteur 40 pour obtenir une concentration de 50g/ha en lipopeptides dont les proportions relatives sont de 70% pour la famille des Iturines (ici mycosubtiline) et de 30% pour la famille des surfactines (ici surfactine A) (modalité 2),
- Surnageant de culture de *Bacillus subtilis* concentré d'un facteur 20 et dilué d'un facteur 10 pour obtenir une concentration 200g/ha en lipopeptides dont les proportions relatives sont de 70% pour la famille des Iturines (ici mycosubtiline) et de 30% pour la famille des surfactines (ici surfactine A) (modalité 3),
- Témoin traité avec le même volume d'eau distillée (modalité Control)

La hauteur des plants et la biomasse fraiche des parties aériennes sont alors mesurés après 6 semaines de culture. Les données sont traitées par une analyse de la variance (ANOVA, méthode LSD au niveau de confiance de 95% soit un seuil de risque de 5%) afin de mettre en évidence les effets significatifs. Le test est réalisé au moyen du logiciel STATGRAPHICS Centurion XV version 15.2.06.

### Résultats

Le protocole expérimental permet de comparer l'effet biostimulant de différentes compositions dérivées d'un surnageant de culture d'une souche *Bacillus* sur la hauteur atteinte par les plants de tomates. Les résultats sont présentés à la Figure 1. L'analyse statistique révèle un effet significatif du traitement sur ce paramètre (P=0,0029). Les groupes statistiques sont indiqués sur le graphique par les lettres a et b, l'ensemble des modalités présentent un effet biostimulant significatif par rapport au témoin.

Les résultats présentés à la Figure 2 montrent que les compositions issus de surnageant de *Bacillus subtilis* contenant des concentrations finales pour le traitement en mycosubtiline de 175 mg/L et en surfactine A de 75 mg/L (modalité 2) et des concentrations finales pour le traitement en mycosubtiline de 700 mg/L et en surfactine A de 300 mg/L (modalité 3) permettent d'augmenter de manière significative la taille des plants de tomates sur une période de 6 semaines en comparaison avec la modalité non traitée (modalité Control). L'effet biostimulant de la modalité 1 issue de surnageant de *Bacillus amyloliquefaciens* contenant des concentrations finales pour le traitement en iturine A de 90 mg/L, en fengycine A et B de 100 mg/L et en surfactine A de 60 mg/L est bien supérieur au témoin non traité mais appartient aux 2 groupes statistiques dont celui du témoin.

### 2.d Effet des compositions de lipopeptides sur l'augmentation de la biomasse fraîche des parties aériennes des plants de tomates.

### Matériel et Méthodes

Le protocole expérimental est identique à celui décrit au paragraphe 2.c ci-dessus.

### Résultats

Le protocole expérimental permet de comparer l'effet biostimulant de différentes compositions dérivées d'un surnageant de culture d'une souche *Bacillus* sur le poids de la biomasse fraîche des parties aériennes des plants de tomates. Les résultats sont présentés dans la Figure 3. L'analyse statistique révèle un effet significatif du traitement sur ce paramètre (P=0,0029).

Les groupes statistiques sont indiqués sur le graphique par des lettres a, b et c.

Les résultats présentés à la Figure 2 montrent que les compositions issues de surnageant de *Bacillus subtilis* contenant des concentrations finales pour le traitement en mycosubtiline de 175 mg/L et en surfactine A de 75 mg/L (modalité 2) et des concentrations finales pour le traitement en mycosubtiline de 700 mg/L et en surfactine A de 300 mg/L (modalité 3) permettent une augmentation significative des biomasses fraiches des parties aériennes par rapport à celles de la modalité non traitée (modalité Control). L'effet biostimulant de la modalité 1 issue de surnageant de *Bacillus amyloliquefaciens* contenant des concentrations finales pour le traitement en iturine A de 90 mg/L, en fengycine A et B de 100 mg/L et en surfactine A de 60 mg/L est bien supérieur au témoin non traité mais appartient à 2 groupes statistiques dont celui du témoin.

### 2.e Effet des compositions de lipopeptides sur l'augmentation de la production de matière humide de plants de blé et de la matière humide des racines de plants de blé

### Matériel et méthodes

Les semences de blé de la variété Tybalt ont été semées sur un substrat inerte. Les racines se développent en milieu liquide. Lorsque les plantes de blé étaient au stade 1-2 feuilles, les plantes ont été plantées dans des pots avec un sol argileux sableux. Les pots ont été maintenus dans une chambre de culture avec 16 heures de lumière et une température de 19° C.

Pour chaque culture et chaque traitement, 20 plantes ont été cultivées. Dix plantes ont été traitées par application de racines (noté R dans les figures 4 et 5); 10 plantes n'ont pas été traitées. Puis, dans le groupe de 10 plantes traitées par application de racines, 5 plantes ont été traitées ensuite par application foliaire (noté R+F dans les figures 4 et 5); 5 plantes n'ont pas été traitées (noté R dans les figures 4 et 5).

Les racines des plants de blé ont été traitées par immersion dans les différentes solutions de produit et immédiatement après le traitement planté dans les pots avec du terreau fruitier sableux. Les applications foliaires ont été appliquées 4 semaines après la plantation avec un volume de pulvérisation de 200 I/ha. La mesure finale est réalisée après 9 semaines de croissance.

Les données obtenues ont été analysées statistiquement avec SAS 7. La normalité a été testée avec Kolmogorov-Smirnov et l'égalité des variances a été testée par le test de Levene. Les variables homoscedastiques normalement distribuées ont été soumises à un Anova bidirectionnel à sens unique avec Tukey comme test post hoc.

Les compositions testées sont les suivantes :
- Surnageant de culture de *Bacillus amyloliquefaciens* concentré d'un facteur 20 et dilué d'un facteur 40 pour obtenir une concentration de 50g/ha en lipopeptides dont les proportions relatives sont de 36% pour la famille des Iturines (ici iturine A) et de 24% pour la famille des surfactines (ici surfactine A) et de 40% pour la famille des fengycines (ici fengycine A et B) (modalitél),
- Surnageant de culture de *Bacillus subtilis* concentré d'un facteur 20 et dilué d'un facteur 40 pour obtenir une concentration de 50g/ha en lipopeptides dont les proportions relatives sont de 70% pour la famille des Iturines (ici mycosubtiline) et de 30% pour la famille des surfactines (ici surfactine A) (modalité 2),
- Surnageant de culture de *Bacillus subtilis* concentré d'un facteur 20 et dilué d'un facteur 20 pour obtenir une concentration 100g/ha en lipopeptides dont les proportions relatives sont de 70% pour la famille des Iturines (ici mycosubtiline) et de 30% pour la famille des surfactines (ici surfactine A) (modalité 4),
- Témoin est traité avec le même volume d'eau distillée (modalité Control)

### Résultats

Le protocole expérimental permet de comparer l'effet biostimulant de différentes compositions dérivées d'un surnageant de culture d'une souche *Bacillus* sur le poids de la biomasse fraîche des parties aériennes (MF plante) et de la biomasse fraiche des racines (MF racine) des plants de blé. Les résultats sont présentés dans la Figure 4. Les groupes statistiques sont indiqués sur le graphique par des lettres A et B pour les parties aériennes et a et b pour les racines.

### - Effet sur la biomasse fraiche des parties aériennes des plants de blé

Les résultats présentés à la Figure 4 montrent que les compositions issues de surnageant de *Bacillus subtilis* contenant des concentrations finales pour le traitement en mycosubtiline de 175 mg/L et en surfactine A de 75 mg/L (modalité 2) appliqué en racinaire et en foliaire (R+F) et des concentrations finales pour le traitement en mycosubtiline de 350 mg/L et en surfactine A de 150 mg/L (modalité 4) appliqué en racinaire (R) permettent une augmentation significative des biomasses fraiches des parties aériennes par rapport à celles de la modalité non traitée (modalité Control).

Les résultats présentés à la Figure 4 montrent que la composition issue d'un surnageant de *Bacillus amyloliquefaciens* contenant des concentrations finales pour le traitement en iturine A de 90 mg/L, en fengycine A et B de 100 mg/L et en surfactine A de 60 mg/L (modalité 1) appliqué uniquement en racinaire (R) ou en racinaire et en foliaire (R+F) est bien supérieur au témoin non traité mais appartient à 2 groupes statistique dont celui du témoin. Un résultat similaire est observé pour la modalité 4 appliquée en racinaire et foliaire (R+F).

### - Effet sur la biomasse fraiche des parties racinaires des plants de blé

Les résultats présentés à la Figure 4 montrent que les compositions issues de surnageant de *Bacillus subtilis* contenant des concentrations finales pour le traitement en mycosubtiline de 175 mg/L et en surfactine A de 75 mg/L (modalité 2) appliqué en racinaire et en foliaire (R+F) et des concentrations finales pour le traitement en mycosubtiline de 350 mg/L et en surfactine A de 150 mg/L (modalité 4) appliqué en racinaire (R) permettent une augmentation significative des biomasses fraiches des parties racinaires par rapport à celles de la modalité non traitée (modalité Control).

Les résultats présentés à la Figure 4 montrent que la composition issue de surnageant de *Bacillus amyloliquefaciens* contenant des concentrations finales pour le traitement en iturine A de 90 mg/L, en fengycine A et B de 100 mg/L et en surfactine A de 60 mg/L (modalité 1) appliqué au niveau racinaire et en foliaire (R+F) est bien supérieur au témoin non traité mais appartient à 2 groupes statistique dont celui du témoin. Un résultat similaire est observé pour la modalité 2 appliquée en racinaire (R) et pour la modalité 4 appliquée en racinaire et foliaire (R+F).

### 2.f Effet des compositions de lipopeptides sur l'augmentation de la teneur en chlorophylle des plants de blé

### Matériel et méthodes

Le protocole expérimental est identique à celui décrit au paragraphe 2.e ci-dessus.

### Résultats

Le protocole expérimental permet de comparer l'effet biostimulant de différentes compositions de lipopeptides dérivées d'un surnageant de culture d'une souche *Bacillus* sur la teneur en chlorophylle des parties aériennes des plants de blé. Les résultats sont présentés dans la Figure 5. Les groupes statistiques sont indiqués sur le graphique par des lettres a, b et c.

Les résultats présentés à la Figure 5 montrent que la composition issue d'un surnageant de *Bacillus subtilis* contenant des concentrations finales pour le traitement en mycosubtiline de 350 mg/L et en surfactine A de 150 mg/L (modalité 4) appliqué en racinaire et foliaire (R+F) permet une augmentation significative de la teneur en chlorophylle des parties aériennes par rapport à celles de la modalité non traitée (modalité Control).

Ces résultats montrent également que la composition issue de surnageant de *Bacillus amyloliquefaciens* contenant des concentrations finales pour le traitement en iturine A de 90 mg/L, en fengycine A et B de 100 mg/L et en surfactine A de 60 mg/L (modalité 1) appliqué en racinaire (R) ou en racinaire et en foliaire (R+F) permet une augmentation significative de la teneur en chlorophylle des parties aériennes par rapport à celles de la modalité non traitée (modalité Control).

### Exemple 3 : Effet de différentes compositions de lipopeptides sur la taille racinaire de semences de tomates après trempage/enrobage des semences

### Matériel et Méthodes

L'essai a été mené sur des graines de tomates de la marque MONEYMAKER. Les graines de tomates ont été préalablement désinfectées en les immergeant dans une solution éthanol/eau ; 75/25 ; v/v pendant 2 min, ensuite 30 min dans du bleach (hypochlorite de sodium) 5% plus du tween (0,1%) et enfin en les rinçant à l'eau jusqu'à disparition complète de la mousse.

Les graines ont ensuite été trempées pendant une heure dans des solutions de lipopeptides de différentes puretés et à différentes concentrations.

Les solutions de lipopeptides ont été concentrées (voir méthodes au 1.b) puis purifiées par filtration tangentielle.

Les solutions ont ensuite été diluées dans du DMSO à 0,1% afin d'obtenir des concentrations en lipopeptides pour la modalité 1 de 50 et 100 µM, pour la modalité 2 de 5, 20 et 100 µM, pour la modalité 3 de 5, 20 et 100 µM, pour la modalité 4 de 5, 20 et 100 µM.

Les graines ont été déposées verticalement sur boîtes de Pétri et misent une nuit au frigo afin de standardiser la germination. Ensuite, les boîtes sont placées dans une étuve à 22°C avec une photopériode de 16h.

Une solution de DMSO à 0.1% dans l'eau distillée sert de témoin à l'expérience.

Chaque modalité est répétée 5 fois dans une boîte de Pétri.

Les compositions testées sont les suivantes :
- Surnageant de culture de *Bacillus subtilis* concentré et purifié contenant 99% de mycosubtiline **(modalité 1)**,
- Surnageant de culture de *Bacillus subtilis* concentré et purifié contenant 99% de surfactine **(modalité 2)**,
- Surnageant de culture de *Bacillus subtilis* concentré et purifié contenant 99% de fengycine **(modalité 3)**,
- Surnageant de culture de *Bacillus subtilis* concentré et purifié contenant 79% d'un mélange contenant les proportions relatives de 40% mycosubtiline et de 60% de surfactine **(modalité 4)**,
- Témoin traité avec le même volume d'une solution de DMSO à 0,1% (**Control**)

La longueur des racines est mesurée après 7 jours d'incubation des boîtes. La normalité a été testée avec le test de Kolmogorov-Smirnov et l'égalité des variances a été testée par le test de Brown-Forsythe ou le test de Kruskal-Wallis. Les variables ont ensuite été soumises à une Anova avec un test post-hoc de Student-Newman-Keuls avec P=0.05 (niveau de confiance de 95% soit un seuil de risque de 5%) afin de mettre en évidence les effets significatifs. Le test a été réalisé au moyen du logiciel SigmaPlot 14.0. Les groupes statistiques sont indiqués par les lettres a et b.

### Résultats

Le protocole expérimental permet de comparer l'effet biostimulant de différentes compositions de lipopeptides purifiés sur la longueur racinaire des graines de tomates. Les résultats présentés à la Figure 6 montrent que les compositions issues de surnageant de *Bacillus subtilis* ont un effet significatif sur la croissance des racines des graines de tomates, à l'exception de la modalité 2. Les groupes statistiques sont indiqués sur le graphique par les lettres a et b. D'après ces résultats, il peut être observé un effet significatif du traitement avec la modalité 1 (mycosubtiline) sur la longueur racinaire à partir de la concentration 50µM (P=0,028). Bien qu'à des concentrations de 20 µM et 100 µM un effet sur la longueur racinaire est observé avec la modalité 2 (surfactine) celui-ci n'est pas statistiquement différent de la condition Control. Un effet biostimulant sur la longueur racinaire est observé pour les modalités 3 (fengycine) (P= 0,05) et 4 (mélange mycosubtiline et surfactine) à partir de 5 µM (P= 0,009).

### Exemple 4 : Effet de différentes compositions de lipopeptides purifiés sur la croissance de plants de tomate, leur efficience photosynthétique et leur conductance stomatique en condition de stress hydrique

L'objectif de cet essai est d'étudier l'effet de compositions de lipopeptides obtenues à partir de différents surnageants concentrés et purifiés de *Bacillus subtilis* sur la croissance, l'efficience photosynthétique et la conductance stomatique de la tomate en conditions de stress hydrique. Les compositions étudiées comprennent différentes puretés et différentes concentrations de lipopeptides.

### Matériel et Méthodes

### Matériel végétal

L'essai est mené à partir de graines de tomates de la marque FANDANGO F1.

Les graines sont semées en plaques de semis (Tourbe Klasmann). L'humidité est maintenue proche de la saturation durant la germination (l'arrosage est fait par subirrigation et par pulvérisation). Au stade 2 feuilles étalées (après 3 semaines), les plantules sont repiquées dans les pots de sol pour l'essai. Lors du repiquage, la tourbe adhérente aux racines est enlevée par trempage à l'eau avant rempotage.

### Préparation du sol et des pots de culture

Le sol de l'essai est un sol agricole sableux dont la composition est connue. Préalablement à l'essai, il est tamisé à 10mm, puis la matière sèche et la capacité de rétention en eau sont mesurées. Lors du lancement de l'essai, chaque pot contient 3,5 kg de sol brut arrosé à 70% de la capacité de rétention maximale (CRmax) en eau du sol. La moyenne de poids de 5 pots est effectuée afin d'avoir un poids de consigne correspondant à 70% de la CRmax.

Les pots sont arrosés au poids de consigne correspondant à 70% de la CRmax en eau du sol du rempotage en période hors stress hydrique. Par ailleurs, un apport initial fertilisant de 100mL d'une solution d'Hakaphos roude 8-12-24 à 2 g/L. 50 mL de cette solution est également apporté avant le stress hydrique. Pendant le stress hydrique, un apport d'une solution de KNO3 et MgSO4 est effectué.

### Stress hydrique

Pendant la période de stress hydrique qui dure 3 semaines, les pots ne sont pas arrosés pendant une semaine, puis ils sont maintenus une semaine à 30% CRmax puis une semaine à 50% CRmax.

### Environnement de l'essai

L'essai est placé en serre de culture pour assurer des conditions semi-contrôlées de température et d'ensoleillement :
- Température : 25°C le jour / 20°C la nuit
- Photopériode : 14h de jour / 10h de nuit

La serre est régulée pour une luminosité minimale de 175 W/m². En dessous de cette luminosité, l'éclairage s'allume et compense la valeur de luminosité. L'ombrage, lui, se déploie au-delà d'une luminosité de 500 W/m² et se replie sous 450 W/m².

### Modalités testées

Les différentes compositions sont apportées trois fois. A chaque apport, 10mL de la composition sont apportés par pot. Le premier apport est effectué au rempotage, cet apport est un apport au sol. Les autres apports sont effectués en pulvérisation foliaire. Le second apport est effectué après 3 semaines de culture et deux jours avant le début du stress hydrique, le troisième est effectué après 10 jours de stress hydrique. La modalité Control est traitée avec le même volume d'eau distillée

Les modalités testées sont les suivantes et chaque modalité comprend 6 pots de répétition.

Les compositions testées sont les suivantes :
- Témoin traité avec le même volume d'eau distillée (**Control**)
- Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 75g/ha en lipopeptides **(modalité 1)**,
- Surnageant de culture de *Bacillus subtilis* concentré et purifié à une pureté de 30% (masse de lipopeptides/masse totale sèche) et dont les proportions relatives sont de 80% de mycosubtiline et de 20% de surfactine. Cette composition est appliquée à raison de 150g/ha en lipopeptides **(modalité 2)**,
- Surnageant de culture de *Bacillus subtilis* concentré et purifié à une pureté de 99% (masse de lipopeptides/masse totale sèche) et dont les proportions relatives sont de 80% de mycosubtiline et de 20% de surfactine. Cette composition est appliquée à raison de 150g/ha en lipopeptides **(modalité 3)**,

Le gain en hauteur des plants entre le début et la fin du stress hydrique, l'efficience photosynthétique en début et en fin de stress hydrique et la conductance stomatique en début et en fin de stress hydrique sont mesurés et comparés à la modalité Control. Les variables sont ensuite soumises à une Anova et un test de Kruskal-Wallis avec P=0.05 (niveau de confiance de 95% soit un seuil de risque de 5%) afin de mettre en évidence les effets significatifs. Le test est réalisé au moyen du logiciel Statgraphics centurion XV - Version 15.2.06. Les groupes statistiques sont indiqués par les lettres a, b et c.

### Résultats

### Gain de hauteur des plants de tomate entre le début et la fin du stress hydrique

A la fin de la période de stress hydrique la hauteur des plants de tomate est comparée à la hauteur initiale avant la période de stress hydrique, le gain de croissance est présenté dans la figure 7. La modalité 1 n'est statistiquement pas différente du la modalité control (P-value= 0,432). Une meilleure croissance est observée avec la modalité 2 mais celle-ci n'est statistiquement pas différente de la modalité control (P-value = 0,124). Un gain significativement différent est observé avec la modalité 3 par rapport à la modalité control (P-value = 0,008).

### Efficience photosynthétique par fluorimétrie PAM

L'efficience photosynthétique a été mesurée par fluorimétrie PAM au début et à la fin du stress hydrique. En cas de stress, la valeur de ϕ (PSII) diminue et les processus non-photochimiques augmentent (dissipation de la chaleur et fluorescence chlorophyllienne) au détriment de la photosynthèse. Sur la figure 8A, une légère augmentation de ϕ (PSII) est observée pour la modalité 3 mais l'effet n'est statistiquement pas significatif (P-value=0,4932). Sur la figure 8B, une augmentation de ϕ (PSII) est observée pour les modalités 2 (effet statistiquement non significatif) et modalité 3 (effet statistiquement significatif) (P-value=0,0070), ces modalités sont donc moins stressées que la condition control. La modalité 1 présente une valeur de ϕ (PSII) plus faible que la condition control (effet statistiquement non significatif).

### Conductance stomatique

La mesure de la conductance stomatique a été effectuée avec un poromètre. Cet appareil permet de mesurer la conductance stomatique des feuilles. La conductance stomatique est la mesure du débit de passage de dioxyde de carbone (CO²) ou de vapeur d'eau par les stomates d'une feuille. Les stomates sont de petits pores sur le dessus et le dessous de la feuille et sont responsables de laisser entrer et d'expulser le CO et l'humidité de et vers l'air extérieur. L'unité de mesure est millimoles par mètre carré seconde (mmol/m²s).
Sur la figure 9A au début du stress hydrique, les modalités 1 et 3 présentent les valeurs de conductance stomatique les plus élevées, signe d'une meilleure ouverture des stomates et donc d'un moindre stress de ces modalités mais cet effet est non statistiquement significatif (P-value=0,0544). Sur la figure 9B à la fin du stress hydrique, les modalités 2 et 3 présentent des valeurs plus faibles que la modalité Control et que la modalité 1 (effet statistiquement significatif, P-value=0,000). Pour ces modalités 2 et 3, les stomates se sont fermés, les plants retiennent mieux l'eau et résistent mieux à la sécheresse.

Ces essais permettent de préciser un des mécanismes d'action des lipopeptides contenus dans les surnageants concentrés de *Bacillus subtilis* comme agent biostimulant, à savoir pour améliorer la résistance à un stress hydrique. Un effet dose est également observé, avec des effets significatifs obtenus à partir de 150 g/ha et ce quel que soit la pureté en lipopeptides dudit surnageant.

## Revendications

1. Utilisation d'au moins un lipopeptide choisi parmi l'iturine A, la mojavensine, la mycosubtiline, les bacillomycines A,B, C, D, F et L, les surfactines A,B,C, la lichenysine, la pumilacidine, les fengycines A et B, les plipastatines A et B, ou l'agrastatinepour stimuler la croissance des plantes.

2. Utilisation selon la revendication 1 dans laquelle ledit lipopeptide est obtenu à partir d'un surnageant d'au moins une souche de *Bacillus* sp.

3. Utilisation selon l'une des revendications 1 ou 2 dans laquelle ledit au moins un lipopeptide est à une concentration d'au moins 20 mg/L (0,002%).

4. Utilisation selon l'une des revendications 1 à 3 odans laquelle ledit au moins un lipopeptide est/sont obtenu(s) à partir des souches de *Bacillus subtilis, Bacillus amyloliquefaciens, Bacillus licheniformis, Paenibacillus polymixa, Bacillus pumilus, Bacillus thuringiensis, Bacillus coagulans, Bacillus mycoides, Bacillus sphaericus, Bacillus velenzensis, Bacillus firmus, Bacillus methylotrophicus, Bacillus megaterium, Bacillus vallismortis.*

5. Utilisation selon la revendication 4 dans laquelle ladite ou au moins l'une desdites souche(s)de *Bacillus sp.* est une souche de *Bacillus subtilis,* de préférence choisie parmi les souches ATCC 6633, ATCC 21332, 168, ATCC 9943 et NCIB 3610 et leurs dérivés ou une souche de *Bacillus amyloliquefaciens,* de préférence choisie parmi les souches FZB42 et LMG S-29032 et leurs dérivés.

6. Utilisation selon l'une des revendications 1 à 5 consistant à appliquer ledit au moins un lipopeptide par traitement foliaire et/ou traitement racinaire et/ou traitement des semences et/ou des bulbes ornementaux.

7. Utilisation selon la revendication 6 pour augmenter la taille des racines.

8. Utilisation selon la revendication 6 pour augmenter la conductance stomatique en cas de stress hydrique

## Patentansprüche

1. Verwendung von mindestens einem Lipopeptid, das zur Stimulierung des Pflanzenwachstums aus Iturin A, Mojavensin, Mykosubtilin, den Bacillomycinen A, B, C, D, F und L, den Surfactinen A, B, C, Lichenysin, Pumilacidin, den Fengycinen A und B, den Plipastatinen A und B oder Agrastatin ausgewählt wird.

2. Verwendung nach Anspruch 1, wobei das Lipopeptid aus einem Überstand von mindestens einem Bacillus sp.-Stamm erhalten wird.

3. Verwendung nach einem der Ansprüche 1 oder 2, bei das mindestens eine Lipopeptid eine Konzentration von mindestens 20 mg/l (0,002%) hat.

4. Verwendung nach einem der Ansprüche 1 bis 3, bei der das mindestens eine Lipopeptid aus den Stämmen Bacillus subtilis, Bacillus amyloliquefaciens, Bacillus licheniformis, Paenibacillus polymixa, Bacillus pumilus, Bacillus thuringiensis, Bacillus coagulans, Bacillus mycoides, Bacillus sphaericus, Bacillus velenzensis, Bacillus firmus, Bacillus methylotrophicus, Bacillus megaterium und Bacillus vallismortis erhalten wird.

5. Verwendung nach Anspruch 4, wobei der oder mindestens einer der Bacillus sp.-Stämme ein Bacillus subtilis-Stamm ist, der vorzugsweise aus den Stämmen ATCC 6633, ATCC 21332, 168, ATCC 9943 und NCIB 3610 und deren Derivaten ausgewählt wird, oder ein Bacillus amyloliquefaciens-Stamm, der vorzugsweise aus den Stämmen FZB42 und LMG S-29032 und deren Derivaten ausgewählt wird.

6. Verwendung nach einem der Ansprüche 1 bis 5, die darin besteht, mindestens ein Lipopeptid durch Blattbehandlung und/oder Wurzelbehandlung und/oder Saatgutbehandlung und/oder Zierzwiebelbehandlung anzuwenden.

7. Verwendung nach Anspruch 6 zur Vergrößerung der Wurzelgröße.

8. Verwendung nach Anspruch 6 zur Erhöhung der stomatalen Leitfähigkeit bei Wasserstress.

## Claims

1. Use of at least one lipopeptide selected from among iturin A, mojavensin, mycosubtilin, bacillomycins A, B, C, D, F and L, surfactins A, B, C, lichenysin, pumilacidin, fengycins A and B, plipastatins A and B, or agrastatin to stimulate growth of plants.

2. Use according to claim 1, wherein said lipopeptide is obtained from a supernatant of at least one strain of *Bacillus* sp.

3. Use according to either of claims 1 or 2, wherein the concentration of said at least one lipopeptide is at least 20 mg/L (0.002%).

4. Use according to any of claims 1 to 3, wherein said at least one lipopeptide is/are obtained from the strains *Bacillus subtilis, Bacillus amyl oliquefaciens, Bacillus licheniformis, Paenibacillus polymixa, Bacillus pumilus, Bacillus thuringiensis, Bacillus coagulans, Bacillus mycoides, Bacillus sphaericus, Bacillus velenzensis, Bacillus firmus, Bacillus methylotrophicus, Bacillus megaterium, Bacillus vallismortis.*

5. Use according to claim 4, wherein said strain or at least one of said strain(s) of *Bacillus* sp. is a strain of *Bacillus subtilis,* preferably chosen from among the strains ATCC 6633, ATCC 21332, 168, ATCC 9943 and NCIB 3610 and their derivatives or a strain of *Bacillus amyloliquefaciens,* preferably chosen from among the strains of FZB42 and LMG 5-29032 and their derivatives.

6. Use according to any of claims 1 to 5, involving application of said at least one lipopeptide by leaf treatment and/or root treatment and/or treatment of the seeds and/or ornamental bulbs.

7. Use according to claim 6 to increase the size of the roots.

8. Use according to claim 6 to increase stomatal conductance in case of water stress.
